Europäisches Patentamt

European Patent Office

Office européen des brevets

(11) Numéro de publication: **0 029 776**
**B1**

(12) **FASCICULE DE BREVET EUROPEEN**

(45) Date de publication du fascicule du brevet: **18.07.84**

(51) Int. Cl.³: **G 01 G 3/14**

(21) Numéro de dépôt: **80401634.3**

(22) Date de dépôt: **14.11.80**

(54) Récepteur de charge à parallélogramme réalisé en une seule pièce.

(30) Priorité: **16.11.79 FR 7928300**

(43) Date de publication de la demande:
**03.06.81 Bulletin 81/22**

(45) Mention de la délivrance du brevet:
**18.07.84 Bulletin 84/29**

(84) Etats contractants désignés:
**AT BE CH DE GB IT LI LU NL SE**

(56) Documents cités:
**GB - A - 1 088 873**
**US - A - 3 049 004**
**US - A - 3 427 875**
**US - A - 3 433 064**
**US - A - 4 065 962**
**US - A - 4 128 001**

(73) Titulaire: **TESTUT-AEQUITAS**
**8, rue Popincourt**
**F-75011 Paris (FR)**

(72) Inventeur: **Langlais, Jacques Fernand**
**38, rue des Ecoles**
**F-91179 Coudray Montreaux (FR)**
Inventeur: **Valadier, Jean-Claude**
**124, Bd. Auguste Blanqui**
**F-75013 Paris (FR)**

(74) Mandataire: **Martin, Jean-Jacques et al,**
**Cabinet REGIMBEAU 26, Avenue Kléber**
**F-75116 Paris (FR)**

Courier Press, Leamington Spa, England.

# Description

La présente invention concerne un récepteur de charge applicable notamment dans les balances à usage commercial.

On connaît déjà dans la technique antérieure des récepteurs de charge comportant un montant fixe solidaire d'un bâti, un montant chargé solidaire d'un plateau porte-charge, et deux bras articulés sur ces montants pour former avec eux un parallélogramme déformable.

La structure la plus simple de ce genre est la balance de ROBERVAL et les structures qui en dérivent. Bien qu'ils soient assez souvent encore utilisés, ces récepteurs de charge, de conception purement mécanique, sont inadaptes à la tendance actuelle qui réclame des balances à mesure électronique et à affichage numérique lumineux.

Pour pallier est inconvénient, on a proposé des récepteurs de charge dans lesquels l'ensemble des deux montants et des deux bras est réalisé d'une seule pièce, les articulations étant définies par des étranglements de la matière constitutive, à la façon d'une charnière élastique.

Un récepteur de charge de ce genre est décrit dans la demande de brevet FR—A—79 08218 déposée le 2 avril 1979.

On connaît d'autre part, d'après le document US—A—4 065 962, un récepteur de charge du type comprenant un montant fixe solidaire d'un bâti, un montant chargé solidaire d'un plateau porte-charge et deux bras articulés sur les montants pour former avec eux un parallelogramme déformable, et dans lequel l'ensemble des deux montants et des deux bras est réalisé par une structure monobloc munie d'étranglements qui définissent les articulations du parallélogramme déformable, certains au moins des étranglements présentant, dans leur zone de flexion, une ligne neutre dont la pente est inclinée sur l'horizontale, tandis qu'un transducteur de charge est prévu pour détecter la déformation du parallélogramme sous l'effet de la charge appliquée sur le plateau.

On sait définir dans un organe en flexion une ligne neutre ou fibre neutre, qui passe par les points d'allongement nul. Cette ligne neutre peut être utilisée pour définir le comportement des étranglements en tant que charnières élastiques.

La présente invention concerne un récepteur de charge du type précité qui soit de réalisation plus facile et permette une meilleure compacité de façon à pouvoir l'intégrer plus failement dans une balance.

Selon la caractéristique essentielle de l'invention, la structure monobloc est délimitée, parallèlement à son axe de symétrie, par deux profils interne et externe à section droite circulaire et à génératrices parallèles, les étranglements sont réalisés dans le profil interne, et la structure monobloc est constituée d'une matière douée de qualités élastiques.

Bien que les étranglements soient souvent symétriques et définis généralement par un contour circulaire, ils peuvent aussi avoir toute autre forme, même asymétrique.

Selon l'invention, la pente de la ligne neutre des étranglements est inclinée sur l'horizontale d'un angle $\alpha$ compris entre 30 et 60°.

La structure monobloc peut être avantageusement réalisée à partir d'un profile, par exemple d'un tube.

Dans le cas où le profilé est un tube, les deux profils à section droite circulaire de la structure monobloc sont constitués respectivement par les profils interne et externe du tube, et les étranglements sont réalisés dans le profil interne du tube.

Le profile doit être constitué d'une matière douée de qualités élastiques, telle que l'acier à ressort, le bronze au beryllium ou un alliage léger.

Les étranglements de la structure monobloc peuvent être réalisés par usinage intérieur du profilé ou bien être obtenus directement par filage du profilé, selon que la matière constitutive du profilé se prête plus facilement à l'une ou à l'autre de ces deux techniques.

Le transducteur de charge comporte avantageusement un transducteur à condensateur formé par une première électrode montée solidaire du montant fixe et une seconde électrode montée solidaire du montant chargé, la charge étant alors mesurée effectivement par des circuits électroniques, dans lesquels on effectue par exemple le rapport de la capacité du transducteur de charge capacitif défini par les première et seconde électrodes, à la capacité d'un condensateur de référence.

Le transducteur de charge peut aussi comporter quatre jauges de contrainte placées chacune sur un étranglement ou placées par paire sur deux étranglements de contraintes opposées ou encore huit jauges de contrainte placées par paire sur les quatre étranglements.

D'autres caractéristiques et avantages de l'invention apparaîtront à la lecture de la description détaillée qui va suivre, faite en référence aux dessins annexés, donnés uniquement à titre d'exemples non limitatifs de différents modes de réalisation du récepteur de charge de l'invention, et sur lesquels:

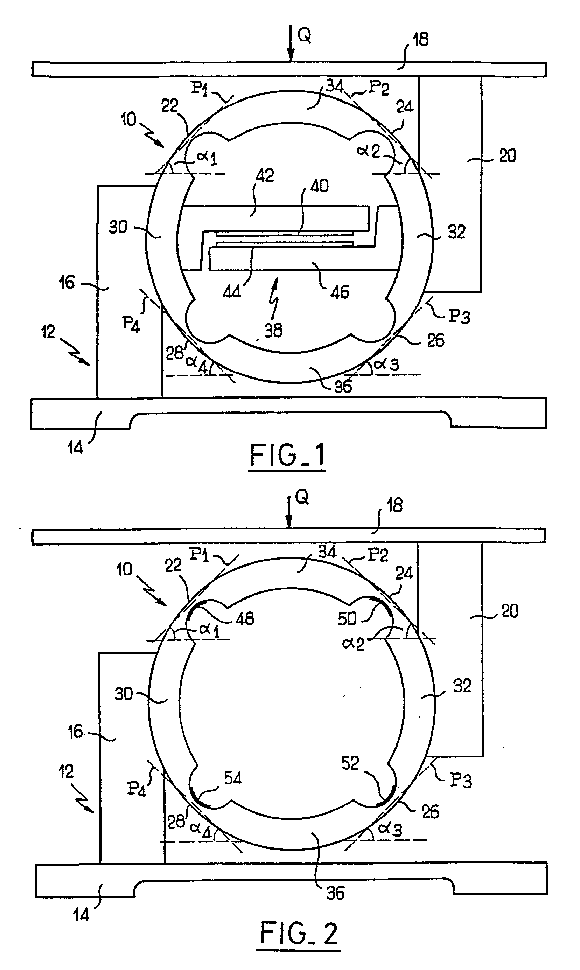

la figure 1 est une vue latérale schématique d'un premier mode de réalisation de l'invention, dans lequel la structure monobloc présente un profil externe circulaire et dans lequel le transducteur de charge est un transducteur à co densateur;

.a figure 2 est une vue latérale schématique d'un second mode de réalisation de l'invention, dans lequel la structure monobloc présente un profil externe circulaire et dans lequel le transducteur de charge comporte quatre jauges de contrainte placées chacune sur un étranglement; et

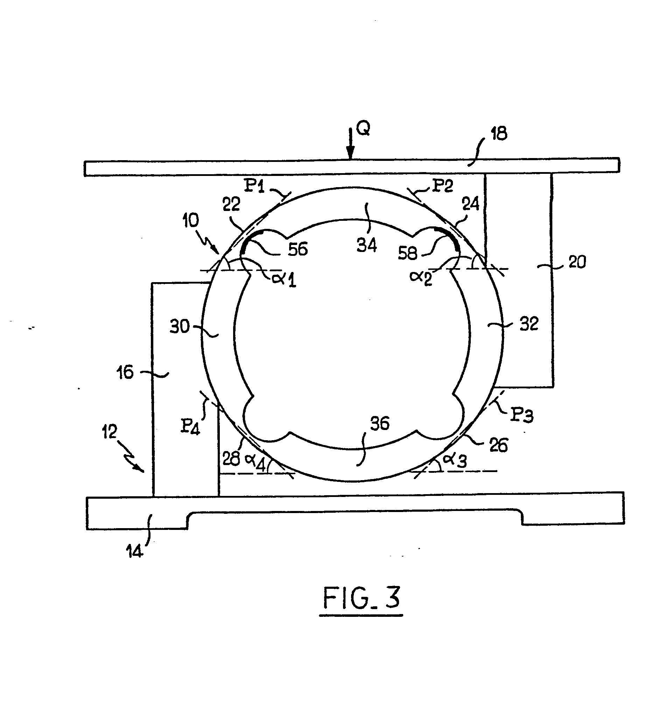

la figure 3 est une vue latérale schématique d'un troisième mode de réalisation de l'invention, dans lequel la structure monobloc présente un profil externe circulaire et dans lequel le transducteur de charge comporte quatre jauges de contrainte placées par paire sur deux étranglements de contraintes opposées.

Suc les figures 1 à 3, les mêmes éléments seront désignés sous les mêmes références numériques. On a représenté sur les figures 1 à 3 une balance, telle qu'une balance commerciale, comportant un récepteur de charge désigné globalement sous la référence numérique 10, solidaire d'un bâti 12 constitué par un socle 14 et une colonne verticale 16, et un plateau porte-charge 18, destiné à supporter en un point quelconque une charge désignée par la lettre Q, ce plateau étant rendu solidaire du parallélogramme 10 par l'intermédiaire d'une colonne 20.

Le parallélogramme déformable 10 est constitué par une structure en anneau circulaire obtenue à partir d'un profilé ayant la forme d'un tube circulaire et présentant quatre étranglements 22, 24, 26 et 28 de la matière constitutive du tube et dirigés suivant des génératrices de ce tube. Ces quatre étranglements constituent les articulations d'un parallélogramme déformable présentant un montant fixe 30 solidaire du bâti 12, un montant chargé 32 solidaire du plateau 18 et deux bras 34 et 36 articulés par leurs extrémités sur les deux montants 30 et 32. Les articulations définies par les étranglements 22, 24, 26 et 28 constituent des charnières élastiques présentant, dans leur zone de flexion, une ligne neutre dont la pente est inclinée sur l'horizontale. Ainsi, les pentes P1, P2, P3 et P4 des lignes neutres des articulations 22, 24, 26 et 28 présentent respectivement une inclinaison $\alpha 1$, $\alpha 2$, $\alpha 3$ et $\alpha 4$ sur l'horizontale. Dans l'exemple représenté, les quatre angles $\alpha 1$, $\alpha 2$, $\alpha 3$ et $\alpha 4$ sont tous égaux à 45°, le parallélogramme articulé ayant les quatre côtés égaux.

Toutefois, cet angle $\alpha$ peut être modifié et varier par exemple entre 30 et 60°.

Cette inclinaison de la peute de la ligne neutre des charnières élastiques permet, pour une contrainte donnée, d'augmenter la portée de la balance et aussi d'obtenir une meilleure compacité du récepteur de charge. On peut choisir l'inclinaison pour optimiser les errreurs dues à l'excentration de la charge Q sur le plateau port-charge.

Le récepteur de charge 10 peut être réalisé à partir d'un profilé en forme de tube circulaire dans lequel les étranglements seront réalisés par usinage intérieur du tube selon des génératrices de celui-ci. En variante, les étranglements peuvent être obtenus directement par filage du tube, dans le cas où la matière constitutive du tube se prête à un tel filage.

Le profilé doit être réalisé en une matière douée de qualités élastiques en sorte que le parallélogramme se déforme de manière réversible lorsque le plateau porte-charge reçoit une charge Q. Cette matière peut être par exemple de l'acier à ressort, du bronze au beryllium ou bien un alliage léger tel que du dural.

La déformation du parallélogramme, sous l'effet d'une charge appliquée sur le plateau porte-charge, est détectée par un transducteur de charge prévu sur le récepteur de charge.

Dans le mode de réalisation représenté sur la figure 1, le transducteur de charge est un transducteur à condensateur désigné par la référence globale 38. Le transducteur 38 comporte une première électrode 40 fixée par l'intermédiaire d'un organe isolant sur un support 42 monté solidaire du montant fixe 30 et une deuxième électrode 44 fixée par l'intermédiaire d'un organe isolant sur un support 46 monté solidaire du montant charge 32. Les deux électrodes 40 et 44 présentent avantageusement des surfaces allongées selon la direction générale des bras 34 et 36. Il est alors préférable, de manière à éviter toute erreur due au fait que les électrodes se déplacent latéralement l'une par rapport à l'autre en fonction de la charge, que la surface de l'une des deux électrodes soit légèrement plus grande que celle de l'autre en sorte que la valeur de la capacité demeure inversement proportionnelle à l'écartement des deux électrodes lui-même proportionnel à la charge appliquée sur le plateau porte-charge.

Ainsi, lorsque le plateau porte-charge 18 est soumis à l'effet d'un poids Q, l'écartement entre les électrodes 40 et 44 et par suite la capacité du transducteur de charge capacitif définie par ces deux électrodes varient en fonction de ce poids.

La charge est alors mesurée effectivement par des circuits électroniques dans lesquels on effectue le rapport de la capacité du transducteur de charge capacitif définie par les deux électrodes, à la capacité d'un condensateur de référence.

Il est alors préférable d'utiliser pour cette mesure les moyens décrits dans la demande de brevet français n° 77 28758 déposée le 23 septembre 1977 au nom de la Demanderesse.

Les expériences conduites par la Demanderesse ont montré que les mesures ainsi réalisées dépendent de la température pour deux raisons:

d'une part, le module d'élasticité ou module de Young du matériau fournissant le rappel élastique varie en fonction de la température, et

d'autre part, les dimensions des différents éléments du récepteur de charge et notamment des supports des électrodes ainsi que la surface des électrodes ellesmêmes varient en fonction de la température. Pour pouvoir compenser de manière satisfaisante les effets de variation de température, la Demanderesse a observé que l'on pouvait procéder comme suit:

Le condensateur de référence est tel que ses supports sont agencés en sorte que la variation relative de l'écartement des électrodes, en fonction de la température, soit égale à la variation relative du module d'élasticité du matériau qui fournit la force du rappel élastique. Pour réaliser une telle compensation, on peut procéder comme décrit dans la demande de brevet français n° 79 08218 au nom de la Demanderesse, déjà citée.

La balance représentée sur la figure 2 reprend la même structure d'ensamble que colle représentée sur la figure 1, à ceci près que l'on a remplacé le transducteur à condensateur par un transducteur comportant quatre jauges de contrainte 48, 50, 52 et 54, placées intérieurement, respectivement sur les étranglements 22, 24, 26 et 28. Ainsi, lorsque le plateau portecharge 18 reçoit une charge Q, les étranglements 48 et 52 travaillent à la compression alors que les étranglements 50 et 54 travaillent à la traction, c'est-à-dire présentent des contraintes opposées à celles des étranglements 48 et 52. En variante, ces quatre jauges de contrainte pourraient étre placées extérieurement sur les quatre étranglements.

Des connexions électriques (non représentées) relient les jauges 48, 50, 52 et 54 à un dispositif électronique de traitement et d'affichage apte à afficher la valeur correspondant à la charge Q appliquée sur le plateau portecharge 18.

La figure 3 représente un mode de réalisation analogue à celui de la figure 2, mais dans lequel les quatre jauges de contrainte sont placées par paire intérieurement sur deux étranglements de contraintes opposées. Dans le mode de réalisation de la figure 3, deux jauges de contrainte 56 sont placées dans l'étranglement 22 et deux jauges de contrainte 58 sont placées dans l'étranglement 24. Ces jauges de contrainte sont reliées comme dans de cas précédent à un dispositif électronique de traitement et d'affichage.

Bien entendu, dans le mode de réalisation de la figure 4, on pourrait utiliser aussi bien le transducteur de charge de l'une des figures 1 à 3, ou inversement.

De façon générale, on peut utiliser tout transducteur de charge apte à détecter la déformation du parallélogramme déformable en fonction de la charge Q appliquée sur le plateau porte-charge. Il convient également de noter que le récepteur de charge peut travailler aussi bien à la compression qu'à la traction et qu'il peut donc trouver d'autres applications que colles des balances à usage commercial.

Bien entendu, le récepteur de charge peut être réalisé sous différentes dimensions en fonction des portées que l'on désire obtenir, celles-ci pouvant correspondre à des masses de quelques kilogrammes à une tonne, voire même davantage.

On pourrait même, pour certaines applications, prévoir quatre doubles charnières élastiques, constituées chacune par deux étranglements, à la place des quatre simples charnières élastiques décrites précédemment.

## Revendications

1. Récepteur de charge du type comprenant un montant fixe (30) solidaire d'un bâti (12), un montant chargé (32) solidaire d'un plateau porte-charge (18) et deux bras (34, 36) articulés sur les montants pour former avec eux un parallélogramme déformable, et dans lequel l'ensemble des deux montants et des deux bras est réalisé par une structure monobloc, munie d'étranglements (22, 24, 26, 28) qui définissent les articulations du parallélogramme déformable, certains au moins des étranglements présentant, dans leur zone de flexion, une ligne neutre dont la pente est inclinée sur l'horizontale tandis qu'un transducteur de charge (38) est prévu pour détecter la déformation du parallélogramme sous l'effet de la charge (Q) appliquée sur le plateau, caractérisé par le fait que la structure monobloc est délimitée, parallèlement à un axe de symétrie, par deux profils interne et externe à section droite circulaire et à génératrices parallèles, que les étranglements sont réalisés dans le profil interne, et que la structure monobloc est constituée d'une matière douée de qualités élastiques.

2. Récepteur de charge selon la revendication 1, caractérisé par le fait que la pente de la ligne neutre des étranglements est inclinée sur l'horizontale d'un angle ($\alpha$) compris entre 30 et 60°.

3. Récepteur de charge selon l'une des revendications 1 et 2, caractérisé par le fait que la structure monobloc est réalisée à partir d'un profilé, tel qu'un tube.

4. Récepteur de charge selon la revendication 3, caractérisé par le fait que les étranglements sont réalisés par usinage intérieur du profilé.

5. Récepteur de charge selon la revendication 3, caractérisé par le fait que les étranglements sont realisés par filage du profilé.

6. Récepteur de charge selon l'une des revendications 1 à 5, caractérisé par le fait que le transducteur de charge comporte un transducteur à condensateur (38) formé par une première électrode (40) montée solidaire du montant fixe (30) et une seconde électrode (44) montée solidaire du montant chargé (32).

7. Récepteur de charge selon l'une des revendications 1 à 5, caractérisé par le fait que le transducteur de charge comporte quatre jauges de contrainte (48, 50, 52, 54) placées chacune sur un étranglement.

8. Récepteur de charge selon l'une des revendications 1 à 5, caractérisé par le fait que le transducteur de charge comporte quatre jauges de contrainte (56, 58) placées par paire sur deux étranglements (22, 24) de contraintes opposées.

## Patentansprüche

1. Lastaufnahme mit einem mit einem Grundgestell (12) fest verbundenen feststehenden Höhenschenkel (30), einem mit einer Lastplatte (18) fest verbundenen belasteten Höhenschenkel (32) und zwei an den Höhenschenkeln anlenkten Armen (34, 36) zur Bildung eines verformbaren Parallelogramms mit diesen, und bei welcher der Aufbau aus den beiden Höhenschenkeln und den beiden Armen durch eine einstückige Struktur verwirklicht ist, welche mit Querschnittsverminderungen (22, 24, 26, 28) versehen ist, welche die Gelenke des verformbaren Parallelogramms bestimmen, wobei wenigstens bestimmte der Querschnittsverminderungen in ihrer Biegezone eine Neutrallinie aufweisen, deren Schräge gegenüber der Horizontalen geneigt ist, wobei ein Lastmaßgrößenumformer (38) zur Feststellung der Verformung des Parallelogramms unter der Wirkung der auf die Platte aufgebrachten Last (Q) vorgesehen ist, dadurch gekennzeichnet, daß die einstückige Struktur parallel zu einer Symmetrieachse durch zwei Umrisse, einen inneren und einen äußeren, mit kreisförmigem Querschnitt und parallelen Erzeugenden begrenzt ist, daß die Querschnittsverminderungen im inneren Umriß vorgesehen sind und daß die einstückige Struktur aus einem mit elastischen Eigenschaften versehenen Werkstoff gebildet ist.

2. Lastaufnahme nach Anspruch 1, dadurch gekennzeichnet, daß die Schräge der Neutrallinie der Querschnittsverminderungen gegenüber der Horizontalen unter einem Winkel ($\alpha$) zwischen 30 und 60° geneigt ist.

3. Lastaufnahme nach einem der Ansprüche 1 und 2, dadurch gekennzeichnet, daß die einstückige Struktur ausgehend von einem Profilteil, etwa einem Rohr, verwirklicht ist.

4. Lastaufnahme nach Anspruch 3, dadurch gekennzeichnet, daß die Querschnittsverminderungen durch innenseitige spanende Bearbeitung des Profilteils verwirklicht sind.

5. Lastaufnahme nach Anspruch 3, dadurch gekennzeichnet, daß die Querschnittsverminderungen durch Fließpressen des Profilteils verwirklicht sind.

6. Lastaufnahme nach einem der Ansprüche 1 bis 5, dadurch gekennzeichnet, daß der Lastmeßgrößenumformer einen Kondensator-Meßgrößenumformer (38) umfaßt, welcher durch eine fest am feststehenden Höhenschenkel (30) angebrachte erste Elektrode (40) und eine fest am belasteten Schenkel (32) angebrachte zweite Elektrode (44) gebildet ist.

7. Lastaufnahme nach einem der Ansprüche 1 bis 5, dadurch gekennzeichnet, daß der Lastmeßgrößenumformer vier Dehnungsmeßstreifen (48, 50, 52, 54) aufweist, die jeweils auf einer der Querschnittsverminderungen angeordnet sind.

8. Lastaufnahme nach einem der Ansprüche 1 bis 5, dadurch gekennzeichnet, daß der Lastmeßgrößenumformer vier Dehnungsmeßstreifen (56, 58) aufweist, die paarweise auf zwei Querschnittsverminderungen (22, 24) entgegengesetzter Belastung angeordnet sind.

## Claims

1. A load receiving device of the type comprising a fixed upright (30) connected to a frame (12), a loaded upright (32) connected to a load-bearing tray (18), and two arms (34, 36) articulated to the uprights and forming therewith a deformable parallelogram in which the assembly of the two uprights and the two arms is formed by a monobloc structure having constrictions (22, 24, 26, 28) which define the articulations of the deformable parallelogram, at least certain of the constrictions having in their bending zone a neutral line whose slope is inclined to the horizontal, while a load transducer (38) is provided to detect the deformation of the parallelogram as a result of the load (Q) applied to the tray, characterized in that the monobloc structure is bounded, parallel with an axis of symmetry, by two profiles (internal and external) of circular cross-section and with parallel generatrices, the constrictions are provided in the internal profile, and the monobloc structure is formed by a material having resilient properties.

2. A load receiving device according to Claim 1, characterized in that the slope of the neutral line of the constrictions is inclined to the horizontal by an angle ($\alpha$) lying between 30 and 60°.

3. A load receiving device according to one of Claims 1 and 2, characterized in that the monobloc structure is made from a sectional member, such as a tube.

4. A load receiving device according to Claim 3, characterized in that the constrictions are produced by machining the inside of the sectional member.

5. A load receiving device according to Claim 3, characterized in that the constrictions are produced by the extrusion of the sectional member.

6. A load receiving device according to one of Claims 1 to 5 characterized in that the load transducer comprises a capacitor transducer (38) formed by a first electrode (40) mounted fast to the fixed upright (30), and a second electrode (44) mounted fast to the loaded upright (32).

7. A load receiving device according to one of Claims 1 to 5, characterized in that the load transducer comprises four strain gauges (48, 50, 52, 54) each disposed on a constriction.

8. A load receiving device according to one of Claims 1 to 5, characterized in that the load transducer comprises four strain gauges (56, 58) disposed in pairs on two constrictions (22, 24) of opposite strains.

FIG_1

FIG_2

FIG. 3